# EUROPÄISCHE PATENTSCHRIFT

(11) **EP 0 820 803 B1**
(45) Veröffentlichungstag und Bekanntmachung des Hinweises auf die Patenterteilung: **02.10.2002**
(21) Anmeldenummer: 97112435.9
(22) Anmeldetag: 21.07.1997
(51) Int. Cl.: B01D 53/78, B01D 53/14, B01D 53/56, B01D 53/58, B01D 53/68

(54) **Reinigung der bei der Herstellung von Mineraldüngemitteln entstehenden Abgase**
Purification of waste gases obtained in the production of mineral fertilizers
Purification de gaz résiduels provenant de la production d'engrais minéral

(30) Priorität: 22.07.1996 DE 19629558
(43) Veröffentlichungstag der Anmeldung: 28.01.1998
(73) Patentinhaber: BASF AKTIENGESELLSCHAFT, 67056 Ludwigshafen (DE)
(72) Erfinder: Meyer, Bernd, Dr., 69509 Mörlenbach (DE); Grimmer, Karl, 67105 Schifferstadt (DE); Nitzschmann, Robert, Dr., 67227 Frankenthal (DE); Jäger, Michael, 69514 Laudenbach (DE); Reuvers, Johannes, Dr., 67591 Hohen-Sülzen (DE); Kling, Georg, Dr., 67105 Schifferstadt (DE); Purucker, Bernard, Dr., 67069 Ludwigshafen (DE); Wunder, Rainer, Dr., 67373 Dudenhofen (DE); Eiden, Ulrich, Dr., 67227 Frankenthal (DE)
(74) Vertreter: Isenbruck, Günter, Dr.

(56) Entgegenhaltungen:
- EP-A- 0 440 932
- EP-A- 0 562 328
- WO-A-93/07087
- GB-A- 1 223 022
- US-A- 4 271 134
- US-A- 4 308 049
- US-A- 4 493 820

## Beschreibung

Die Erfindung betrifft ein Verfahren zur gemeinsamen Reinigung der bei der Herstellung von Mineraldüngemitteln entstehenden Abgase mittels einer Waschlösung.

Als Prozeßwässer werden üblicherweise wäßrige Lösungen bezeichnet, die z.B. beim Herstellungsverfahren der Mineraldünger entstehen, sowie solche, die beim Spülen von Apparateteilen anfallen, wie auch Waschlösungen, die aus Abgaswäschen anderer Apparate stammen. Diese Abwässer können zusätzlich verdünnt sein, um bestimmte Konzentrationen an Chemikalien nicht zu überschreiten; sie sind auch nicht immer klare Lösungen, d.h. sie enthalten oftmals auch ungelöste Feststoffteilchen.

Verfahren zur Herstellung von Mineraldüngemitteln wie Nitrophosphat- oder Nitrophosphat-Kalium-Dünger (NP- oder NPK-Dünger) weisen im allgemeinen folgende sequentielle Verfahrensschritte auf:
- Aufschluß: die Auflösung der festen Rohstoffe (Rohphosphat, Diammoniumphosphat, Monoammoniumphosphat, u.a.) in Mineralsäuren und Ausschleusung unlöslicher Bestandteile
- Umwandlung: gezielte Kristallisation unerwünschter Bestandteile
- Neutralisation: Neutralisation der sauren Lösung mit NH₃
- Eindampfung: Konzentrierung der Lösung, auch als Maische bezeichnet, durch Wasserabdampfung
- Kalimischung: Zudosierung von Kali- und anderen Salzen zur Formeleinstellung
- Granulation und Trocknung: Formgebung der Maische in Granulat und Restwasserentfernung mittels Brenngasen/Heißluft.

Bei Durchführung dieser Verfahrensschritte treten Abgase und Dämpfe in unterschiedlichen Mengen und mit unterschiedlichen Gehalten an Stickoxiden (NOₓ), Ammoniak (NH₃), Wasserdampf, Fluorwasserstoff (HF), Siliciumfluorid (SiF₄) und Feststoffstäuben (Alkali- und Erdalkalinitrate, -sulfate, -phosphate, -fluoride und Mischsalze) in Abhängigkeit von den eingesetzten Rohstoffen und der Endformel des zu erzeugenden mineralischen Düngemittels auf.

Entsprechend den bestehenden gesetzlichen Vorschriften müssen die Abgase und die Dämpfe vor Abgabe an die Umwelt behandelt werden, um die enthaltenen Inhaltsstoffe zu reduzieren. Hierfür sind bereits eine Reihe von Verfahren bekannt geworden. So beschreibt die EP-B 0 440 932 ein Verfahren zur Wäsche von Abgasen der Düngemittelproduktion, die Ammoniak und Staub enthalten. Die Waschlösung ist eine 50%ige, mit Salpetersäure angesäuerte Ammoniumnitratlösung. Es wird eine Formel (Ungleichung) zur Berechnung des pH-Wertes angegeben, die gewährleistet, daß keine Ammoniumnitrataerosole entstehen. Der pH-Wert hat ausschließlich Einfluß auf die Aerosolbildung. Er hat keine Auswirkung auf die Waschwirkung bezüglich des vorhandenen Staubes.

Die US 4,342,731 beschreibt ein Verfahren zur Reinigung von Abgasen aus Verbrennungsöfen, die Schwefelwasserstoff und Ammoniak enthalten. Dabei wird eine Apparatur wechselweise entweder als Reinigungskolonne oder als Eindampfapparatur betrieben. Die Apparatur ist in verschiedene Zonen (räumlich getrennte Apparateteile) unterteilt und wird als "Konzentrator/ Wäscher" bezeichnet.

In der EP-A-0 562 328 wird ein Verfahren zur Reinigung von bei der Herstellung von Mineraldüngemitteln entstehenden Abgasen beschrieben. In einer Ausführungsform des Verfahrens können Phosphate im Spülwasser enthalten sein. Es werden keine bestimmten Werte für die Phosphatmenge angegeben. Ferner wird vorgeschlagen, einen solchen pH-Wert einzustellen, daß kein Aerosol eines NH4-Salzes entsteht. Im Ausrührungsbeispiel wird ein pH von 3,5 angegeben.

Die US 4, 493,820 beschreibt ein Verfahren zur teilweisen Entfernung von Verunreinigungen aus Waschlösungen. Die Waschlösung fällt bei der Reinigung von Abgasen aus der Herstellung von Ammoniumphosphat an. Dabei werden die vereinigten Abgase, die aus der Neutralisation der Phosphorsäure mit Ammoniak, der Granulierung des Ammoniumphosphats sowie der Trocknung und Abkühlung des fertigen Granulats herrühren, mit Phosphorsäure gewaschen. Es werden die unlöslichen Verunreinigungen entfernt, so daß eine klare Waschlösung anfällt, die zumindest teilweise in die Herstellung des Ammoniumphosphats zurückgeführt wird.

In der US 4,308,049 wird ein Verfahren zur Absorption von Ammoniak in sauren Lösungen oder Aufschlämmungen beschrieben. Es wird vorgeschlagen, den Bereich, in dem Ammoniak absorbiert wird, von dem Bereich zu trennen, in dem Wasserdampf gebildet wird. Dies wird durch eine Druckdifferenz zwischen den beiden Bereichen erreicht. Die Absorption des Ammoniaks erfolgt nahe der Einleitungsstelle in die saure Lösung bzw. Aufschlämmung, wodurch wegen des Überdrucks, trotz der starken Wärmetönung der Reaktion, kein Wasserdampf entsteht. Der im Bereich niederen Drucks entstehende ammoniakhaltige Wasserdampf wird abgeführt und einer Rückgewinnung des Ammoniaks zugeführt.

In der US 4,271,134 wird ein Verfahren zur Behandlung von Abgasen, die bei der Herstellung von Ammoniumphosphatdüngemittel entstehen, beschrieben. Die Abgase entstehen bei der Neutralisation der Phosphorsäure mit Ammoniak sowie bei der Trocknung des Düngemittels. Die Abgase können für die Wiederaufbereitung auch vereinigt werden. Die Aufarbeitung erfolgt mit konzentrierter Phosphorsäure und anschließender Behandlung der Gase mit einem trockenen, fein verteilten Absorptionsmaterial, mit dem die Feststoffe aus dem Gas entfernt werden. Eine Gaswäsche mit verdünnter Phosphorsäure wird als möglich beschrieben.

In der EP 0 440 932 wird ein Verfahren zur Wäsche von Abgasen der Düngemittelproduktion, die Ammoniak und Staub enthalten, beschrieben. Die Waschlösung ist eine 50%-ige, mit Salpetersäure angesäuerte Ammoniumnitratlösung. Es wird eine Formel (Ungleichung) zur Berechnung des pH-Wertes angegeben, die gewährleistet, daß keine Ammoniumnitrataerosole entstehen.

Die WO 93/07087 (D6) betrifft ein Verfahren, bei dem die Härte von NH-haltigen Zusammensetzungen, insbesondere Lösungen von Harnstoff, erniedrigt wird. Dazu wird u.a. auch vorgeschlagen, diesen Lösungen Phosphate beizugeben. Als NHhaltige Lösungen werden auch ammoniakhaltige Lösungen beschrieben. Die Schrift betrifft nicht die Reinigung von Abgasen, die bei der Ammoniumphospatdüngerherstellung entstehen.

Die EP-A 0 562 328 beschreibt die gemeinsame Aufarbeitung der gesammelten Abgase und Dämpfe aus Neutralisation, Eindampfung, Kalimischung, Granulation und Trocknung aus der Düngemittelproduktion in nur einer Apparatur mit trennwirksamen Einbauten, in der eine thermodynamische Stufe realisiert wurde. Die Abgase werden gereinigt, und gleichzeitig wird durch den Wärmegehalt der Abgase soviel Wasser verdampft, daß eine Feststoffkonzentration (gelöste und ungelöste Bestandteile) bis zu 60 Gew.-% in der Waschlösung erreicht werden kann. Die Prozeßwässer zur Ergänzung der Waschlösung entstammen dem Düngemittelherstellungsprozeß, und die konzentrierte Suspension wird in ihn zurückgeführt. Sie enthält Additive (z.B. Salpetersäure und/oder Ammoniak), Phosphationen und die aus dem Prozeß stammenden und aus den Abgasen abgeschiedenen Stoffe.

Die genannten Veröffentlichungen beschreiben Verfahren, in denen nur einzelne Abgasströme der Düngemittelproduktion gereinigt werden und/oder nur selektiv einzelne Schadstoffe aus den Abgasen entfernt werden und/oder zur Reinigung mehrstufige Verfahren vorgesehen sind. Die gleichzeitige Behandlung von gesammelten Abgasen in einer Wasch-apparatur mit einer realisierten thermodynamischen Stufe, wie sie in der EP-A 0 562 328 beschrieben ist, führt dazu, daß die in den Abgasen enthaltene Vielzahl von Schad- und Feststoffen in der Waschlösung niedergeschlagen wird und dort durch Reaktion miteinander und Fällung/Kristallisation zu unlöslichen Sedimenten und Anbackungen im Flüssigkeitsverteiler der umlaufenden Waschlösung und in den trennwirksamen Einbauten (z.B. Schüttungen, Packungen von Füllkörpern) führt. Das hat erheblich verkürzte Standzeiten mit häufigen Betriebsstörungen, Abstellungen und Reinigungen zur Folge.

Der Erfindung liegt die Aufgabe zugrunde, in einem Verfahren zur Reinigung der bei der Herstellung von Mineraldünger entstehenden Abgase mit Prozeßwässern in einer Reinigungskolonne die durch Ablagerungen in der Waschapparatur bedingten Betriebsstörungen, Abstellungen und Reinigungszyklen erheblich zu reduzieren.

Die Lösung geht aus von einem Verfahren zur gemeinsamen Reinigung der bei der Herstellung von Mineraldüngemitteln entstehenden Abgase mittels einer Waschlösung, in einer Waschkolonne, bei der Prozeßwässer mindestens einen Teil der Waschlösung bilden. Das erfindungsgemäße Verfahren ist dadurch gekennzeichnet, daß die Waschlösung einen Phosphatgehalt von mindestens 1 Gew.-%, vorzugsweise von mindestens 2 Gew.-%, gerechnet als P₂O₅, gelöst in der klaren Waschlösung, aufweist, ferner der pH-Wert der Waschlösung mittels Mineralsäuren, vorzugsweise mittels Salpetersäure (HNO₃), in einem Bereich von pH 3 bis 5,5, vorzugsweise pH 3,6 bis 4,2, eingestellt wird, und die im Kreislauf geführte Waschlösung, bezogen auf die Querschnittsfläche der Waschvorrichtung, mindestens 25 m³/m²h beträgt. Als klare Waschlösung ist dabei die Waschlösung ohne die in ihr normalerweise enthaltenen ungelösten Feststoffe definiert. Gemäß einer besonders vorteilhaften Ausbildung der Erfindung wird der Phosphatgehalt der Waschlösung durch Verwendung der im Herstellungsverfahren der Mineraldüngemittel anfallenden phosphathaltigen Stäube und/oder sauren Phosphatlösung eingestellt. Die im Herstellungsverfahren im Abgas enthaltenen Stäube enthalten je nach Art des produzierten Mineraldüngers unterschiedliche Anteile an Phosphaten. Ihre Niederschlagung während des Waschprozesses trägt zur P₂O₅-Konzentrationseinstellung bei. Die über die Stäube anfallende P₂O₅-Menge kann so groß sein, daß eine zusätzliche Zuführung der sauren Phosphatlösung, die bei der eingangs erwähnten Umwandlung durch Kristallisation anfällt, nicht erforderlich ist. Eine Zudosierung von H₃PO₄ zur Phosphateinstellung ist ebenfalls möglich, meist aber nicht erforderlich.

Als Waschlösung werden vorteilhafterweise im Herstellungsverfahren der Düngemittel anfallende saure Prozeß- und Spülwässer verwendet, die vor der Einleitung in die Waschapparatur durch Einleitung und Lösung von NH₃ oder HNO₃ ebenfalls auf den vorgenannten pH-Wert eingestellt werden. Bei geeigneter Wahl von Schüttkörpern kann die Kreislaufmenge der Waschlösung bis zu 125 m³/m²h betragen.

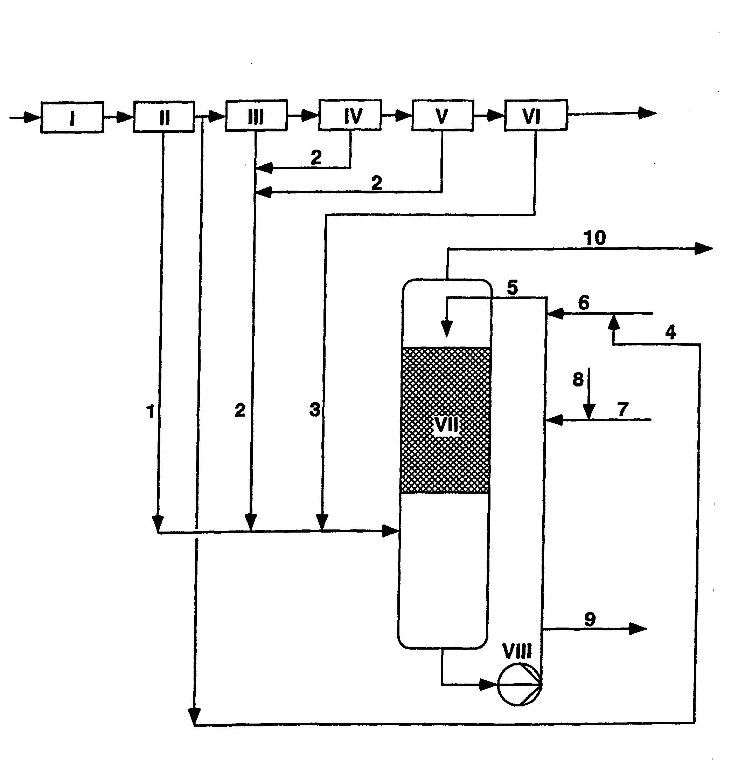

Weitere Einzelheiten und Vorteile der Erfindung können dem im folgenden anhand des in der Zeichnung dargestellten Verfahrensschemas beschriebenen Ausführungsbeispiel entnommen werden.

In diesem Verfahrensschema sind die eingangs genannten bekannten sequentiellen Verfahrensschritte in Blockform dargestellt und mit römischen Bezugszeichen versehen. In diesen Stufen laufen folgende Verfahrensschritte ab:
I. Aufschluß: Hier werden die festen Rohstoffe (Rohphosphat, Diammoniumphosphat, Monoammoniumphosphat, u.a.) in Salpetersäure aufgelöst, und die unlöslichen Bestandteile werden ausgeschleust.
II. Umwandlung: Hier wird durch gezielte Kristallisation Calciumnitrattetrahydrat abgetrennt. Dabei entsteht eine saure Phosphatlösung, die im wesentlichen aus einer Mischung von Salpeter- und Phosphorsäure besteht.
IV. Eindampfung: Durch weitere Verdampfung von Wasser wird die Lösung (Maische) in dieser Stufe konzentriert.
V. Kalimischung: Hier werden zur Einstellung der Endformel des herzustellenden Produkts Kalium- und andere Salze zudosiert.
VI. Granulation und Trocknung: In dieser Stufe erfolgt die Formgebung der Maische in Granulate und die Restwasserentfernung mittels Heißluft.

In dieser Abfolge von Verfahrensstufen entstehen einzelne Gasströme, die dem unteren Bereich einer mit Einbauten, vorzugsweise mit Füllkörpern versehenen Waschsäule VII zugeführt werden. Im einzelnen handelt es sich hierbei um die mit arabischen Ziffern bezeichneten folgenden Ströme 1, 2 und 3. Das bei der Umwandlung in Stufe II entstehende Abgas, das im wesentlichen als Schadstoffe NOx und Fluoride enthält, wird durch Leitung 1 der Waschkolonne VII zugeführt. Die Waschkolonne VII kann als Füllkörperkolonne ausgebildet sein. Sie kann auch in bekannter Weise mit Packungen oder Böden ausgestattet sein. Aus der Neutralisation (III), der Eindampfung (IV) sowie aus der Kalimischung (V) werden durch die Leitungen 2 Dämpfe und Brüden abgeführt und der Waschkolonne VII zugeführt. Es sind wasserdampfhaltige Abgase, die im wesentlichen folgende Verbindungen enthalten: NH₃, Fluoride. Sie können gemeinsam weitergeleitet und zusammen mit dem durch Leitung 1 geführten Abgas der Waschkolonne VII zugeleitet werden. In diese Zuleitung wird außerdem über Leitung 3 das Abgas aus der Granulation und Trocknung (VI) in die Waschkolonne VII eingeführt. Die in der Waschkolonne anfallende Sumpfflüssigkeit wird durch eine Leitung 5 abgezogen und mittels einer Umwälzpumpe VIII dem oberen Teil der Waschkolonne VII zugeführt. Aus der durch Leitung 5 im Kreislauf geführten Waschsuspension, die auch ungelöste Feststoffe enthält, wird durch Leitung 9 konzentrierte Waschsuspension ausgeleitet und in den Herstellungsprozeß des Mineraldüngers zurückgeführt. Zum Ausgleich der Wasserverluste und zum Ausgleich der durch Leitung 9 abgezogenen konzentrierten Waschsuspension werden durch Leitung 7 Prozeß- und/oder Spülwässer zugerührt. Diesen kann durch Leitung 8 Ammoniak oder Salpetersäure zudosiert werden, um den pH-Wert der durch Leitung 7 zugeführten Wässer dem pH-Wert der Kreislaufsuspension in Leitung 5 anzugleichen. Zur Einstellung des pH-Werts und/oder der Phosphatkonzentration der in Leitung 5 im Kreislauf geführten Waschlösung kann durch Leitung 6 Salpetersäure oder saure Phosphatlösung zugesetzt werden, die über die Leitung 4 zwischen den Stufen Umwandlung (II) und Neutralisation (III) abgezogen werden kann. Falls erforderlich, kann auch Phosphorsäure zugeführt werden. Das gereinigte Abgas wird durch Leitung 10 abgezogen.

Die mit einer nach dem vorbeschriebenen Schema arbeitenden Apparatur erzielten Ergebnisse sind den folgenden Tabellen zu entnehmen. Hierbei sind die der Waschkolonne zugeführten Gase mit den in der Beschreibung des Schemas verwendeten arabischen Ziffern versehen. In den Tabellen sind die Betriebsdaten für eine erfindungsgemäße Sammelabgaswäsche in einer einstufigen Füllkörperkolonne zusammengefaßt. Die pH-Einstellung erfolgte mit 60%iger HNO₃.

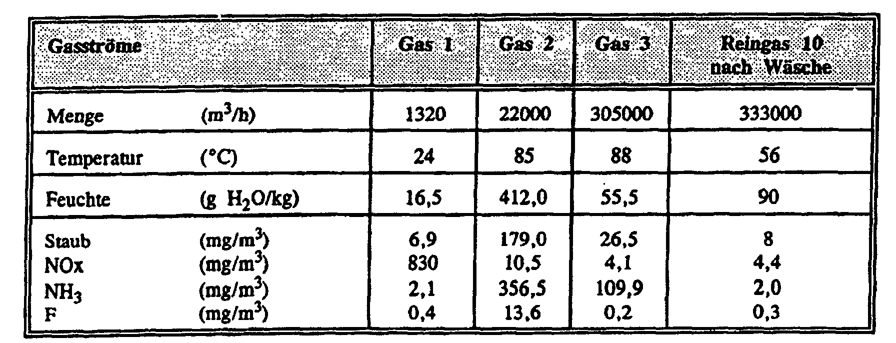

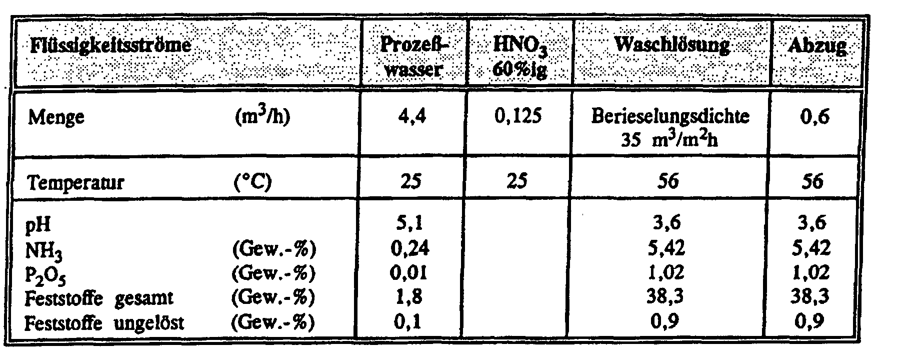

Es wurde gefunden, daß sich bei Einhaltung der erfindungsgemäßen Betriebsparameter die Standzeit der Waschkolonne gegenüber bekannten Verfahren, wie beispielsweise in der EP-A 0 562 328 beschrieben, ganz erheblich erhöhte. Sedimentationen und Anbackungen werden bei gleichzeitiger Einhaltung der gesetzlich vorgeschriebenen Abgasgrenzwerte stark verzögert und reduziert. Damit geht eine erhebliche Reduzierung der Kosten für Abstellungen, Produktionsausfall und Reinigungsaufwand einher.

## Patentansprüche

1. Verfahren zur gemeinsamen Reinigung der bei der Herstellung von Mineraldüngemitteln entstehenden Abgase mittels einer Waschlösung in einer Waschkolonne, bei der Prozeßwässer mindestens einen Teil der Waschlösung bilden, **dadurch gekennzeichnet, daß** die Waschlösung einen Phosphatgehalt von mindestens 1 Gew.-%, vorzugsweise von mindestens 2 Gew.-%, gerechnet als P₂O₅, gelöst in der klaren Waschlösung, aufweist, ferner der pH-Wert der Waschlösung mittels Mineralsäuren, vorzugsweise Salpetersäure (HNO₃), in einem Bereich von pH 3 bis pH 5,5, vorzugsweise pH 3,6 bis 4,2, eingestellt wird, und die im Kreislauf geführte Waschlösung bezogen auf die Querschnittsfläche der Waschkolonne, mindestens 25 m³/m²h beträgt.

2. Verfahren nach Anspruch 1 , wobei als Waschlösung im Herstellungsverfahren der Mineraldüngemittel anfallende saure Prozeß- und Spülwässer verwendet werden, die durch Einleitung und Lösung von NH₃ oder HNO₃ auf den erforderlichen pH-Wert eingestellt werden.

3. Verfahren nach einem der Ansprüche 1 oder 2, wobei der Phosphatgehalt der Waschlösung durch Absorption der im Herstellungsverfahren der Mineraldüngemittel entstehenden phosphathaltigen Stäube eingestellt wird.

4. Verfahren nach einem der Ansprüche 1 bis 3, wobei der Phosphatgehalt der Waschlösung durch kontrollierte Zudosierung der im Herstellungsverfahren der Mineraldüngemittel anfallenden sauren Phosphatlösung eingestellt wird.

5. Verfahren nach einem der Ansprüche 1 bis 4, wobei der Phosphatgehalt der Waschlösung durch kontrollierte Zudosierung von H₃PO₄ eingestellt wird.

## Claims

1. A process for the joint purification by means of a wash solution in a wash column of the waste gases formed in the production of inorganic fertilizers in which the process waters form at least one part of the wash solution, **characterized in that** the wash solution has a phosphate content of at least 1% by weight, preferably of at least 2% by weight calculated as P₂O₅, dissolved in the clear wash solution, furthermore the pH of the wash solution is set in a range from pH 3 to pH 5.5, preferably pH 3.6 to 4.2, by means of mineral acids, preferably nitric acid (HNO₃), and the circulated wash solution is at least 25 m₃/m₂h based on the cross-sectional area of the washing column.

2. A process as claimed in claim 1, wherein, as wash solution, acidic process and rinsing waters formed in the production process of the inorganic fertilizers are used, which are adjusted to the necessary pH by introduction and dissolution of NH₃ or HNO₃.

3. A process as claimed in either of claims 1 and 2, wherein the phosphate content of the wash solution is adjusted by absorption of the phosphate-containing dusts formed in the production process of the inorganic fertilizers.

4. A process as claimed in any of claims 1 to 3, wherein the phosphate content of the wash solution is adjusted by controlled metering-in of the acidic phosphate solution formed in the production process of the inorganic fertilizers.

5. A process as claimed in any of claims 1 to 4, wherein the phosphate content of the wash solution is adjusted by controlled metering-in of H₃PO₄.

## Revendications

1. Procédé pour la purification conjointe des gaz d'échappement, que l'on obtient lors de la préparation d'engrais minéraux, à l'aide d'une solution de lavage dans une colonne de lavage, dans lequel les eaux de traitement forment au moins une partie de la solution de lavage, **caractérisé en ce que** la solution de lavage présente une teneur en phosphate d'au moins 1 % en poids, de préférence d'au moins 2 % en poids, calculé comme P₂O₅, à l'état dissous dans la solution claire de lavage, on règle ensuite la valeur de pH de la solution de lavage, à l'aide d'acides minéraux, de préférence d'acide nitrique (HNO₃), dans la plage d'un pH de 3 à un pH de 5,5, de préférence d'un pH de 3,6 à 4,2, et la solution de lavage guidée en circulation, par rapport à la section de passage de la colonne de lavage, s'élève à au moins 25 m³/m²h.

2. Procédé selon la revendication 1, dans lequel on utilise, à titre de solution de lavage, les eaux de traitement et les eaux de rinçage acides que l'on obtient dans le procédé de préparation des engrais minéraux, eaux dont on règle la valeur de pH requise par introduction et dissolution de NH₃ ou de HNO₃.

3. Procédé selon l'une quelconque des revendications 1 ou 2, dans lequel on règle la teneur de la solution de lavage en phosphate par absorption des poussières contenant du phosphate que l'on obtient dans le procédé de préparation des engrais minéraux.

4. Procédé selon l'une quelconque des revendications 1 à 3, dans lequel on règle la teneur de la solution de lavage en phosphate par addition dosée contrôlée de la solution de phosphate acide que l'on obtient dans le procédé de préparation des engrais minéraux.

5. Procédé selon l'une quelconque des revendications 1 à 4, dans lequel on règle la teneur de la solution de lavage en phosphate par addition dosée contrôlée de H₃PO₄.
